Europäisches Patentamt

(19) European Patent Office

Office européen des brevets

(11) Numéro de publication: **0 012 056**
**B1**

(12) **FASCICULE DE BREVET EUROPEEN**

(45) Date de publication du fascicule du brevet:
01.02.84

(21) Numéro de dépôt: **79400868.0**

(22) Date de dépôt: **14.11.79**

(51) Int. Cl.³: **G 01 S 7/46,** G 01 S 13/18,
G 01 S 13/70

(54) Dispositif de télémétrie et son utilisation dans un radar de poursuite.

(30) Priorité: **05.12.78 FR 7834225**

(43) Date de publication de la demande:
**11.06.80 Bulletin 80/12**

(45) Mention de la délivrance du brevet:
**01.02.84 Bulletin 84/5**

(84) Etats contractants désignés:
**BE CH DE GB IT NL SE**

(56) Documents cités:
**GB - A - 1 102 962**
**US - A - 3 246 324**
**US - A - 3 820 119**

**IEEE TRANSACTIONS ON GEOSCIENCE**
**ELECTRONICS, vol. GE-8, no. 1, janvier 1970, New York,**
**US, LINDGREN et al.: "Theory and noise dynamics of**
**the delay-locked loop", pages 30-40**

(73) Titulaire: **THOMSON-CSF, 173, Boulevard Haussmann,**
**F-75379 Paris Cedex 08 (FR)**

(72) Inventeur: **Lacomme, Philippe, "THOMSON-CSF" -**
**SCPI 173, bld Haussmann, F-75360 Paris Cedex 08 (FR)**

(74) Mandataire: **Benoit, Monique et al, THOMSON-CSF**
**SCPI 173, Bld Haussmann, F-75379 Paris Cedex 08 (FR)**

Dispositif de télémetrie et sou utilisation dans un radar de poursuite

L'invention est relative à un dispositif de télémétrie et à l'utilisation d'un tel dispositif dans un radar de poursuite.

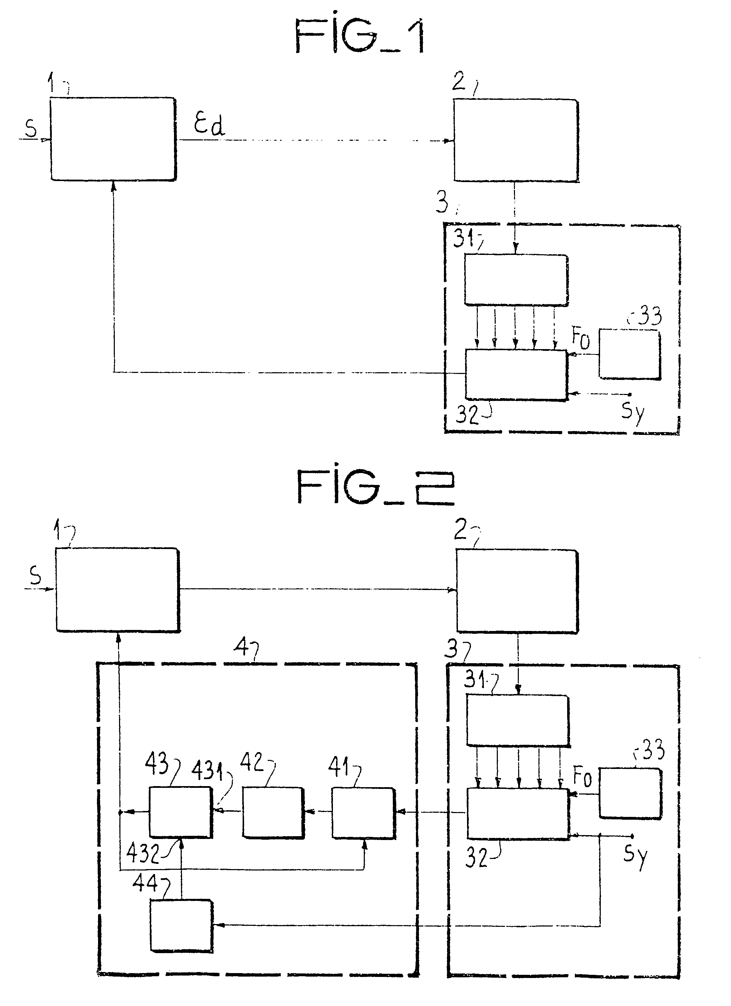

Dans les systèmes de télémétrie des radars de poursuite classiques, les circuits de télémétrie permettant de mesurer la distance d'un écho de cible et d'assurer la poursuite d'un tel écho par une marque de télémétrie permettant d'engendrer une fenêtre de poursuite peuvent être constitués par des circuits numériques. De tels circuits sont représentés figure 1 et comportent une unité arithmétique 2 qui calcule, à partir d'information d'erreur distance $\varepsilon d$, ou décalage entre la position du signal d'écho, et la fenêtre de poursuite engendrée par un détecteur d'écart 1, la distance réelle de l'écho. Cette distance est exprimée, par exemple en temps de retard de la marque de télémétrie par rapport à l'impulsion d'émission du radar lorsque celui ci est un radar à impulsions. A cet effet le détecteur d'écart est alimenté d'une part par le signal vidéo fréquence du radar S et d'autre part, par un système générateur 3, d'une marque de télémétrie ou fenêtre de poursuite de référence.

Le système générateur de la marque de télémétrie comporte habituellement un registre numérique 31 et un compteur-décompteur d'impulsions 32 chargé, par l'intermédiaire du registre numérique 31, initialement avant le début de chaque récurrence à la valeur de la distance exprimée en temps de retard calculée par l'unité arithmétique 2. Le compteur-décompteur 32 est alimenté, à partir du signal de synchronisation $S_y$ déclenché par le signal d'émission radar, par une horloge 33, très stable, en impulsions de fréquence Fo par exemple. Lorsque N impulsions ont été décomptées par le compteur-décompteur 32, le passage par zéro du compteur-décompteur délivre au détecteur d'écart 1 une impulsion constituant la marque de télémétrie. La marque de télémétrie a un retard de $\dfrac{N}{Fo}$ par rapport à l'impulsion d'émission qui représente la position en distance de l'écho, la fenêtre de poursuite en distance étant, par exemple, engendrée au niveau du détecteur d'écart 1 pour l'échantillonnage du signal vidéo S. Un tel dispositif est décrit par exemple dans le brevet américain US-A-3 820 119 de Casse et al.

Un tel dispositif comporte toutefois l'inconvénient de délivrer une marque de télémétrie dont le retard, ou la position, est entaché d'une erreur de quantification égale à un élément de distance correspondant à un intervalle de temps entre deux impulsions d'horloge, soit une erreur égale à une valeur $\dfrac{1}{Fo}$. Cette erreur de quantification prend, au niveau des dispositifs d'utilisation de la fenêtre de poursuite en distance, la forme d'une incertitude de position qui se manifeste par une oscillation de position connue sous le vocable anglosaxon de »jitter«. Ce jitter de position est en particulier très préjudiciable aux performances d'élimination d'échos fixes des radars de poursuite indicateurs de cibles mobiles, dits »radars MTI«, car il se traduit par un bruit d'amplitude qui affecte le filtrage Doppler.

Une solution au problème précédent consiste à augmenter la fréquence d'horloge Fo afin de diminuer l'erreur de quantification. Pour un taux d'élimination des échos fixes $\tau$EEF, le jitter tolérable est sensiblement donné par le rapport $\dfrac{\tau}{\tau\,\text{EEF}}$, où $\tau$ est la durée de l'impulsion émise par le radar, ce qui conduit au choix d'une horloge de fréquence Fo très élevée, par exemple Fo = 200 MHz pour 0,5 $\mu$s et $\tau$EEF = 40 dB.

Les techniques de mise en oeuvre du système générateur de la marque de télémétrie sont alors très délicates à mettre en oeuvre et également très coûteuses.

Un objet de la présente invention est la mise en oeuvre d'un dispositif de télémétrie dont le jitter de position de la marque de télémétrie est compatible avec une poursuite en distance bien que la fréquence des impulsions d'horloge soit maintenue à une valeur inférieure à quelques dizaines de mégahertz.

Un autre objet de la présente invention est la mise en oeuvre d'un dispositif de télémétrie comportant un filtrage temporel du retard de la marque de télémétrie représentative de l'information distance d'un écho utile.

Selon l'invention, le dispositif de télémétrie pour radar de poursuite comportant une première boucle de poursuite en distance d'un écho mobile qui comprend:

— un premier détecteur d'écart qui reçoit sur une première entrée le signal d'écho mobile et délivre un signal d'écart de position du signal d'écho et d'une marque de télémétrie;
— des moyens de calcul numérique de la distance de l'écho;
— des moyens générateurs d'impulsions d'horloge de fréquence de répétition déterminée et
— des moyens générant par comptage décomptage des impulsions d'horloge, une fenêtre de poursuite de référence;
— est caractérisé en ce qu'il comporte en outre une deuxième boucle analogique de recopie qui, insérée entre la sortie des moyens générateurs de la fenêtre de poursuite de référence et la deuxième entrée du premier détecteur d'écart, comporte connectés en cascade:
— un deuxième détecteur d'écart qui reçoit sur sa première entrée la fenêtre de poursuite de référence en sortie des moyens générateurs et délivre un signal d'écart de position de la fenêtre de poursuite et de la marque de télémétrie;

— un intégrateur qui reçoit le signal délivré par le deuxième détecteur d'écart;

— un détecteur de coincidence qui reçoit sur une première entrée de comparaison le signal délivré par l'intégrateur et sur une deuxième entrée de comparaison le signal délivré par un générateur de dent de scie synchrinisé et délivre à la coincidence une impulsion représentative de la marque de télémétrie vers la deuxième entrée du premier détecteur d'écart et vers la deuxième entrée du deuxième détecteur d'écart.

Un tel dispositif de télémétrie est particulièrement adapté à une utilisation dans les systèmes radar MTI aéroportés, la mise en oeuvre de l'objet de l'invention ne demandant qu'un supplément très faible de composants et circuits classiques par rapport aux systèmes de télémétrie numérique de l'art antérieur.

L'invention sera mieux comprise à l'aide de la description et des dessins ci-après dans lesquels, outre la figure 1 représentant un système de télémétrie numérique de l'art antérieur,

— la figure 2 représente un schéma fonctionnel du dispositif de l'invention,
— la figure 3 représente un schéma synoptique d'un détail de l'invention conformémentà la figure 2,
— la figure 4 représente en 4a, 4b, 4c, 4d, un diagramme des temps en différents points A, B, C, D, du dispositif tel que représenté figure 3.

Selon la figure 2, le dispositif de télémétrie pour radar de poursuite objet de l'invention comporte, ainsi que décrit précédemment, un détecteur décart de position I d'un signal d'écho S et d'une marque de télémétrie, des moyens de calcul numérique 2 de la distance de l'écho et des moyens 3 générateurs d'une fenêtre de poursuite de référence par comptage-décomptage des impulsions d'une horloge 33 de fréquence de répétition Fo déterminée. Le dispositif comporte en outre une deuxième boucle analogique 4 de recopie de la fenêtre de poursuite de référence insérée dans la première boucle de poursuite. La deuxième boucle analogique relie la sortie des moyens générateurs de la fenêtre de poursuite de référence, et plus spécialement le compteur-décompteur 32 au détecteur d'écart de position 1 du signal d'écho et de la marque de télémétrie. La deuxième boucle analogique 4 de recopie de la fenêtre de poursuite de référence délivre au détecteur d'écart de position 1 la marque de télémétrie après filtrage de la position de la fenêtre de poursuite de référence dont le bruit de quantification ou jitter est considérablement atténué.

Selon un mode de réalisation non limitatif de l'invention représenté figure 2, la deuxième boucle analogique comporte d'une part, connectés en cascade, un détecteur d'écart 41 de la marque de télémétrie et de la fenêtre de poursuite de référence, des moyens intégrateurs 42 recevant le signal délivré par le détecteur d'écart 41 de la marque de télémétrie et de la fenêtre de poursuite de référence, et un détecteur de coincidence 43 recevant sur une première entrée 431 le signal délivré par les moyens intégrateurs 42. La deuxième boucle analogique comporte en outre un générateur de dent de scie synchronisé 44 délivrant un signal de comparaison à une deuxième entrée 432 ou entrée de comparaison du détecteur de coïncidence 43. Le générateur synchronisé 44 reçoit les signaux de synchronisation $S_y$ des impulsions d'émission radar délivrés par les circuits d'émission du radar non représentés figure 2. Le détecteur de coïncidence 43 comporte une sortie reliée d'une part à l'entrée du détecteur d'écart de position 1 du signal d'écho et de la fenêtre de poursuite en distance et au détecteur d'écart 41 de la marque de télémétrie et de la fenêtre de poursuite de référence.

Le fonctionnement du dispositif représenté figure 2 est le suivant:

Le détecteur d'écart 41 de la marque de télémétrie et de la fenêtre de poursuite de référence délivre un signal représentatif de l'écart de position entre la fenêtre de poursuite de référence et la marque de télémétrie délivrée par la deuxième boucle de poursuite analogique. Les moyens intégrateurs 42 constitués, par exemple, par un intégrateur analogique classique, délivrent un signal représentatif de la distance de l'écho à la coïncidence de la marque de télémétrie et de la fenêtre de poursuite de référence, ce signal est proportionnel à l'écart de position entre la fenêtre de poursuite de référence et la marque de télémétrie. Le générateur de dent de scie 44 fournit une rampe de tension déclenchée par le signal de synchronisation d'émission du radar. Le générateur de dent de scie 44 est un générateur du type classique bien connu de l'homme de l'art.

Le détecteur de coïncidence 43 joue le role de générateur de marque de télémétrie à la coïncidence des niveaux de signal en dent de scie et du signal délivrée par l'intégrateur. La marque de télémétrie délivrée en sortie de la deuxième boucle analogique est utilisée au niveau du détecteur d'écart 1 pour déclencher la fenêtre de poursuite en distance qui assure l'échantillonnage du signal vidéo fréquence, et, au niveau du détecteur d'écart 41, pour mesurer l'écart de position entre la fenêtre de poursuite de référence et la marque de télémétrie. Le fonctionnement de la deuxième boucle analogique est, en définitive, semblable au fonctionnement d'une boucle de télémétrie analogique classique comprenant un intégrateur dans laquelle le signal vidéo issu du récepteur est remplacé par la fenêtre de poursuite de référence issue du calculateur numérique.

La précision de position du zéro et de linéarité étant assurée par la fenêtre de poursuite de référence, les caractéristiques de la deuxième boucle analogique sont choisies de manière à optimaliser la réduction du jitter. Ainsi le rapport de réduction du jitter, fonction du rapport entre la cadence de calcul du calculateur arthmétique et de la bande passante de la deuxième boucle analogique, peut être choisi l'ordre de 10, par le simple choix de la constante de temps de l'intégrateur qui détermine la bande passante de la deuxième boucle analogique. La bande passante de la deuxième boucle analogique est fixée à environ dix fois la bande passante de la boucle complète afin de ne pas diminuer la stabilité de l'ensemble du dispositif.

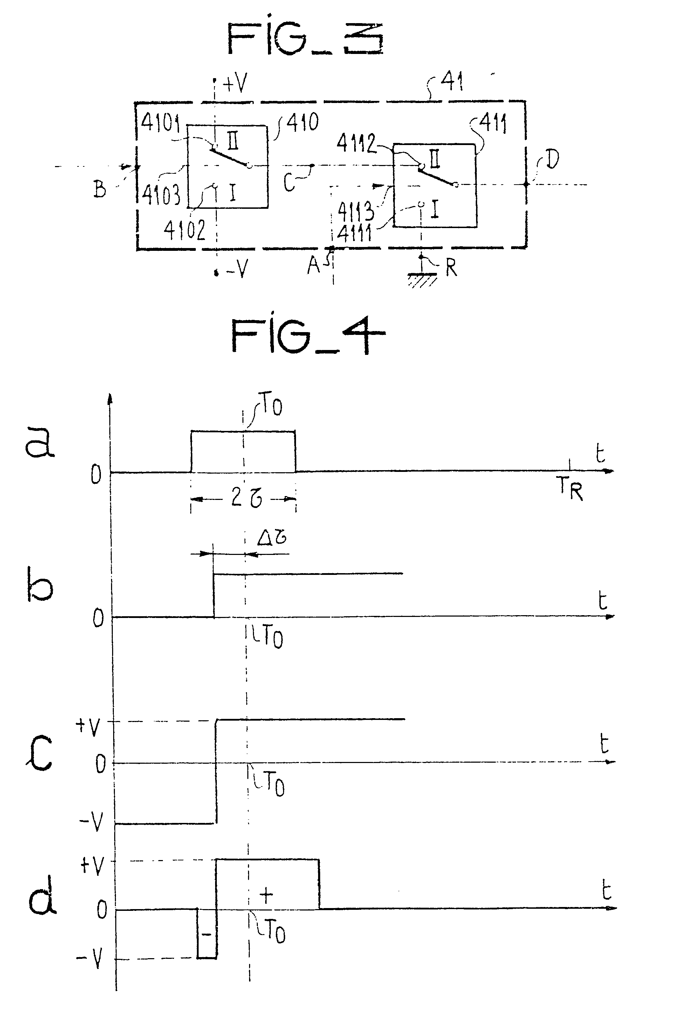

Selon le mode de réalisation particulier de l'invention représenté, à titre d'exemple, figure 3, le détecteur d'écart 41 de la marque de télémétrie et de la fenêtre de poursuite de référence comporte des premiers moyens de commutation 410 comportant deux bornes de commutation 4101, 4102 respectivement alimentées par deux sources de tension continues opposées +V, —V. Les premiers moyens de commutation comprennent d'une part une entrée de commande 4103 recevant en fonctionnement la marque de télémétrie et, d'autre part, une borne de sortie délivrant un premier signal de commutation. La détecteur d'écart 41 comporte en outre des deuxième moyens de commutation à deux position 411 dont les bornes de commutation 4111 et 4112 sont respectivement alimentées par la tension de référence R du dispositif et par le premier signal de commutation. Les deuxièmes moyens de commutation 411 reçoivent sur une entrée de commande 4113 la fenêtre de poursuite de référence.

Le fonctionnement du dispositif représenté figure 3 est le suivant compte tenu des diagrammes de temps relevés aux points test A, B, C, D de la figure 3 et représentés figure 4.

Au point A, la fenêtre de poursuite de référence délivrée par le calculateur arithmétique est représentée par une impulsion de durée 2 $\tau$ centrée par rapport à un instant To représentatif de la distance de l'écho par rapport à l'origine des temps O début d'une récurrence d'émission radar de durée TR.

Au point B, la coïncidence de la dent de scie engendrée par le générateur de dent de scie et le signal de l'intégrateur 42 engendre la marque de télémétrie dont le décalage par rapport à l'instant To est mesuré par la quantité $\Delta\tau$.

Avant l'impulsion de durée 2 $\tau$ de la fenêtre de poursuite de référence les premiers et deuxièmes moyens de commutation sont en position I et le signal délivré en D est nul le signal en C étant égal à —V.

L'impulsion de durée 2 $\tau$ de la fenêtre de poursuite de référence amène les deuxièmes moyens de commutation en position II et le signal en D devient égal à —V jusqu'à l'apparition en B de l'impulsion de marque de télémétrie, celle-ci entraînant la commutation des premiers moyens de commutation en II et le passage du signal délivré en D par le détecteur d'écart 41 à la valeur +V. L'intégration par l'intégrateur du signal délivré en D par le détecteur d'écart 41 donne directement une mesure de la distance de l'écho à la coïncidence de l'impulsion de la marque de télémétrie et de l'instant To représentatif de la distance de l'écho par rapport à l'origine O de la récurrence d'émission considérée.

En fait le jitter dû à la quantification entraîne une variation de l'instant To autour d'une position moyenne. Le signal en sortie de l'intégrateur 42 tel que la position de la marque de télémétrie recopie cette position moyenne avec un jitter beaucoup plus faible que le jitter d'origine, l'intégrateur effectuant un filtrage de la position de cette marque de télémétrie.

Suivant un mode de réalisation particulier non limitatif de l'objet de l'invention, le détecteur d'écart 41 est constitué par une porte analogique comportant au moins deux entrées de commande recevant respectivement, en fonctionnement, l'impulsion représentative de la marque de télémétrie et de la fenêtre de poursuite de référence et deux entrées de polarisation recevant les tensions continues opposées +V et —V. A titre d'exemple non limitatif la porte analogique est constituée par un circuit intégré connu sous la dénomination commerciale de »DG 190«.

**Revendications**

1. Dispositif de télémétrie pour radar de poursuite comportant une première boucle de poursuite en distance d'un écho mobile comprenant

— un premier détecteur d'écart (1) qui reçoit sur une première entrée le signal d'écho mobile et délivre un signal d'écart de position du signal d'écho et d'une marque de télémétrie,
— des moyens (2) de calcul numérique de la distance de l'écho,
— des moyens (33) générateurs d'impulsions d'horloge de fréquence de répétition déterminée et des moyens (3) générant, par comptage — décomptage des impulsions d'horloge, une fenêtre de poursuite de référence qui alimente la deuxième entrée du premier détecteur d'écart (1),

caractérisé en ce qu'il comporte en outre une deuxième boucle analogique (4) de recopie de la fenêtre de poursuite de référence qui, insérée entre la sortie des moyens générateurs (3) de la fenêtre de poursuite de référence et la deuxième entrée du premier détecteur d'écart (1), comporte connectés en cascade un deuxième détecteur d'écart (41) qui reçoit sur sa première entrée la fenêtre de poursuite de référence en sortie des moyens générateurs (3) et délivre un signal d'écart de position de la fenêtre de poursuite et de la marque de télémétrie, un intégrateur (42) qui reçoit le signal délivré par le deuxième détecteur d'écart (41), un détecteur de coïncidence (43) qui reçoit sur une première entrée de comparaison (431) le signal délivré par l'intégrateur (42) et sur une deuxième entrée de comparaison (432) le signal délivré par un générateur de dent

## Page 7 / 8 — 0 012 056

de scie synchronisé (44) et délivre à la coïncidence une impulsion représentative de la marque de télémétrie vers la deuxième entrée du premier détecteur d'écart (1) et vers la deuxième entrée du deuxième détecteur d'écart (41).

2. Dispositif de télémétrie selon la revendication 1, caractérisé en ce que le deuxième détecteur d'écart (41) comporte:

— des premiers moyens de commutation à deux positions (410) dont les bornes de commutation (4101, 4102) sont respectivement alimentées par deux tensions continues opposées, les premiers moyens de commutation comprenant une entrée de commande (4103) constituant la deuxième entrée du deuxième détecteur d'écart (41) et recevant en fonctionnement l' impulsion représentative de la marque de télémétrie en sortie de la deuxième boucle analogique et une borne de sortie délivrant un premier signal de commutation (c);

— des deuxièmes moyens de commutation à deux positions (411) dont les bornes de commutation (4111 et 4112) sont respectivement alimentées par la tension de référence du dispositif e t par le premier signal de commutation, les deuxièmes moyens de commutation comportant une entrée de commande (4113) constituant la première entrée du deuxième détecteur d'écart (41) et recevant en fonctionnement la fenêtre de poursuite de référence, le deuxième circuit de commutation comportant une borne de sortie (D) délivrant un signal représentatif de l'écart entre la marque de télémétrie et la fenêtre de poursuite de référence.

3. Dispositif de télémétrie selon la revendication 1, caractérisé en ce que le deuxième détecteur d'écart (41) est constitué par une porte analogique comportant au moins deux entrées de commande recevant respectivement en fonctionnement l'impulsion représentative de la marque de télémétrie et de la fenêtre de poursuite de référence et deux entrées de polarisation recevant les tensions continues opposées +V et —V.

4. Utilisation d'un dispositif de télémétrie selon l'une quelconque des revendications 1 à 3 dans un radar de poursuite.

**Patentansprüche**

1. Entfernungsmeßvorrichtung für ein Verfolgungsradar mit einer ersten Enfernungs-Verfolgungsschleife zur Verfolgung eines mobilen Echos, enthaltend:

— einen ersten Ablagedetektor (1), der an einem ersten Eingang das Signal des mobilen Echos empfängt und ein Signalecho- Positionsablage und Telemetriemarken-Signal abgibt,

— Mittel (2) zur numerischen Berechnung der Echoentfernung,

— Mittel (33) zur Erzeugung von Taktimpulsen bestimmter Wiederholungsfrequenz sowie Mittel (3), die durch Aufwärts/Abwärts-Zählen der Taktimpulse ein Referenz-Verfolgungsfenster erzeugen, das den zweiten Eingang des ersten Ablagedetektors (1) speist,

dadurch gekennzeichnet, daß sie ferner eine zweite Analogschleife (4) zur Nachbildung des Referenz-Verfolgungsfensters umfaßt, die zwischen den Ausgang der Mittel (3) zur Erzeugung des Referenz-Verfolgungsfensters und den zweiten Eingang des ersten Ablagedetektors (1) eingefügt ist und in Kaskade geschaltet einen zweiten Ablagedetektor (41), der an seinem ersten Eingang das Referenz-Verfolgungsfenster vom Ausgang der Generatormittel (3) empfängt und ein Verfolgungsfenster-Positionsablage- und Telemetriemarken-Signal abgibt, einen Integrator (42), der das von dem zweiten Ablagedetektor (41) abgegebene Signal empfängt, einen Koinzidenzdetektor (43), der an einem ersten Vergleichereingang (431) das von dem Integrator (42) abgegebene Signal und an einem zweiten Vergleichereingang (432) das von einem synchronisierten Sägezahngenerator (44) abgegebene Signal empfängt und bei Koinzidenz einen die Telemetriemarke darstellenden Impuls an den zweiten Eingang des ersten Ablagedetektors (1) und an den zweiten Eingang des zweiten Ablagedetektors (41) abgibt.

2. Entfernungsmeßvorrichtung nach Anspruch 1, dadurch gekennzeichnet, daß der zweite Ablagedetektor (41) umfaßt:

— erste Umschaltmittel mit zwei Stellungen (410), deren Umschaltanschlüsse (4101, 4102) durch zwei einander entgegengesetzte Gleichspannungen gespeist sind, wobei die ersten Umschaltmittel einen Steuereingang (4103) umfassen, welcher den zweiten Eingang des zweiten Ablagedetektors (41) bildet und im Betrieb den die Telemetriemarke darstellenden Impuls vom Ausgang der zweiten analogen Schleife empfängt, und einen Ausgangsanschluß aufweisen, der ein erstes Umschaltsignal (C) abgibt,

— zweite Umschaltmittel mit zwei Stellungen (411), deren Umschaltanschlüsse (4111, 4112) durch die Referenzspannung der Vorrichtung bzw. durch das erste Umschaltsignal gespeist sind, wobei die zweiten Umschaltmittel einen Steuereingang (4113), der den ersten Eingang des zweiten Ablagedetektors (41) bildet und im Betrieb das Referenz-Verfolgungsfenster empfängt, und einen Ausgangsanschluß (D) umfassen, welcher ein Signal abgibt, das die Abweichung zwischen der Telemetriemarke und dem Referenz-Verfolgungsfenster darstellt.

3. Entfernungsmeßvorrichtung nach Anspruch 1, dadurch gekennzeichnet, daß der zweite Ablagedetektor (41) aus einer analogen Torschaltung gebildet ist, die wenigstens zwei Steuereingänge aufweist, von denen der erste im Betrieb den die Telemetriemarke darstellenden Impuls und der zweite das Referenz-Verfolgungsfenster empfängt, und zwei Polarisationseingänge aufweist, welche die einander entgegengesetzten Gleichspannungen +V und −V empfängt.

4. Verwendung einer Entfernungsmeßvorrichtung nach einem der Ansprüche 1 bis 3 in einem Verfolgungsradar.

## Claims

1. Telemetric device for a tracking radar comprising a first range tracking loop for tracking a movable echo, comprising

- a first deviation detector (1) receiving on a first input the movable echo signal and supplying an echo position deviation and telemetric mark signal,
- means (2) for numerical computation of the echo distance,
- means (33) for generating clock pulses of a determined repetition frequency and means (3) generating, by up/down counting of the clock pulses, a tracking reference window feeding the second input of the first deviation detector (1),

characterized in that it further comprises a second analog loop (4) for copying the tracking reference window, which is inserted between the output of the means (3) for generating the tracking reference window and the second input of the first deviation detector (1) and comprises, in cascade connection, a second deviation detector (41) receiving the tracking reference window from the output of the generator means (3) on its first input and supplying a tracking window position deviation and telemetric mark signal, an integrator (42) receiving the signal supplied by the second deviation detector (41), a coincidence detector (43) receiving the signal supplied by the integrator (42) on its first comparing input (431) and the signal supplied by a synchronized saw-tooth generator (44) on a second comparing input (432), and supplying, upon coincidence, a pulse representative of the telemetric mark towards the second input of the first deviation detector (1) and towards the second input of the second deviation detector (41).

2. Telemetric device according to claim 1, characterized in that the second deviation detector (41) comprises:

- a first switching means having two positions (410) and the switching terminals (4101, 4102) of which are respectively fed by two opposed direct voltages, the first switching means comprising a control input (4103) forming the second input of the second deviation detector (41) and receiving, in operation, the pulse representing the telemetric mark from the output of the second analog loop, and an output supplying a first switching singnal (C);
- second switching means having two positions (411) and the switching terminals (4111 and 4112) of which are respectively fed by the reference voltage of the device and by the first switching signal, the second switching means comprising a control input (4113) forming the first input of the second deviation detector (41) and receiving, in operation, the tracking reference window, the second switching circuit comprising an output terminal (D) supplying a signal representative of the deviation between the telemetric mark and the tracking reference window

3. Telemetric device according to claim 1, characterized in that the second deviation detector (41) is composed of an analog gate comprising at least two control inputs respectively receiving, in operation, the pulse representative of the telemetric mark and the tracking reference window, and two polarization inputs receiving the opposed direct voltages +V and −V.

4. Use of a telemetric device according to any of claims 1 to 3 in a tracking radar.

# FIG_1

# FIG_2

# FIG_3

# FIG_4